# EUROPÄISCHE PATENTSCHRIFT

(11) **EP 2 710 271 B1**
(45) Veröffentlichungstag und Bekanntmachung des Hinweises auf die Patenterteilung: **03.12.2014**
(21) Anmeldenummer: 13706914.2
(22) Anmeldetag: 28.01.2013
(51) Int. Cl.: F16C 25/06, F16C 35/06, F16C 19/54, F03D 11/00

(54) **LAGEREINHEIT EINER WINDKRAFTANLAGE**
BEARING UNIT OF A WIND TURBINE
UNITÉ DE PALIER D'UNE ÉOLIENNE

(30) Priorität: 02.02.2012 DE 102012001969; 13.04.2012 DE 102012206113; 19.10.2012 DE 102012020653
(43) Veröffentlichungstag der Anmeldung: 26.03.2014
(73) Patentinhaber: Eolotec GmbH, 90429 Nürnberg (DE)
(72) Erfinder: PICK, Mathias, 90459 Nürnberg (DE); LOSERT, Wolfgang, 90408 Nürnberg (DE)
(74) Vertreter: FDST Patentanwälte
(86) Internationale Anmeldenummer: PCT/EP2013/000245
(87) Internationale Veröffentlichungsnummer: WO 2013/113487

(56) Entgegenhaltungen:
- EP-A2- 2 149 702
- EP-A2- 2 290 250
- WO-A2-2009/141140
- US-A- 4 336 641
- US-A1- 2007 177 829
- US-A1- 2009 245 969

## Beschreibung

Die Erfindung betrifft eine Lagereinheit einer Windkraftanlage mit dem Merkmal des Oberbegriffs des Patentanspruchs 1.

Eine derartige Lagereinheit ist aus der DE 10 2008 036 217 A1 zu entnehmen.

Windkraftanlagen weisen allgemein einen Turm auf, an dessen Kopfende eine drehbare Gondel angeordnet ist, die einen Maschinenträger bildet. An der Gondel ist eine Rotornabe um eine Rotationsachse drehbar gelagert, an der Rotorblätter befestigt sind.

Bei Windkraftanlagen gibt es sowohl Direktantriebskonzepte, bei denen die Drehbewegung der Rotornabe direkt und unmittelbar auf einen Rotor eines Generators übertragen wird. Alternativ ist zwischen der Rotornabe und dem Generator ein Getriebe zwischengeschaltet.

Eine technische Herausforderung bei derartigen Windkraftanlagen, die beispielsweise für einen Leistungsbereich von mehreren Megawatt elektrischer Leistung ausgelegt sind, ist die Bereitstellung einer Lagerung, die hohen technischen Anforderungen genügt, wie beispielsweise eine hohe Biegesteifigkeit, eine spielfreie Lagerung, eine verschleißarme Kinematik sowie eine möglichst einfache Montage bei gleichzeitig hoher Wirtschaftlichkeit.

Aus dem Stand der Technik sind bereits unterschiedlichste Lösungskonzepte für diese Lagerproblematik bekannt. So ist beispielsweise die sogenannte Zweipunktlagerung aus der DE 601 31 764 T2 und die sogenannte Dreipunktlagerung aus der DE 10 2006 037 890 A1 bekannt. Bei diesen wird eine mit der Rotornabe verbundene Rotorwelle durch mehrere voneinander beabstandete Lager gelagert. Bei den Lagern handelt es sich vorwiegend um sogenannte Pendelrollenlager. Diese Konzepte weisen jedoch in nacheiliger Weise ein hohes Axialspiel auf, das bei unterschiedlichen Windlasten zu Stößen, Axialschub und auch Verkippungen führen kann, wodurch nachfolgende Komponenten wie beispielsweise Getriebe oder Generator belastet werden, so dass deren Lebensdauer und auch deren Effizienz aufgrund von größeren erforderlichen Spaltmaßen in nachteiliger Weise beeinflusst wird. Auch weist eine solche Lageranordnung eine vergleichsweise geringe Steifigkeit aufgrund des Spiels auf. Weiterhin zeigen derartige Lager kein optimales Abwälzverhalten, was zu einer hohen Reibung und damit zu einem erhöhten Verschleiß und letztendlich zu einer geringen Lebensdauer führt. Aufgrund der unterschiedlichen Lastverteilungen in Axialrichtung ist die zweite Lagerreihe in einem zweireihigen Pendelrollenlager regelmäßig überdimensioniert, was unter Kostengesichtspunkten von Nachteil ist.

Alternativ sind auch Zweipunktlagerungen mit einem zweireihigen Kegelrollenlager und einem Zylinderrollenlager bekannt. Im Vergleich zu den Pendelrollenlagem weisen diese ein geringeres Axialspiel auf. Sie sind auch toleranter gegen temperaturbedingte Ausdehnungen, da das Zylinderrollenlager üblicherweise als ein Loslager verwirklicht ist. Auch hier ist jedoch die zweite Reihe des Kegelrollenlagers überdimensioniert und die Kosten für die gesamte Lagerung sind vergleichsweise hoch. Zudem bestehen hohe Anforderungen an einer achsparallelen Ausrichtung der Rotorwelle mit der Rotornabe, da Zylinderrollenlager kritisch bei Verkippung sind.

Für Hochleistungs-Windkraftanlagen im Multi-Mega-Watt-Bereich ist die sogenannte Momentenlagerung bekannt, wie sie beispielsweise aus der DE 10 2009 017 865 A1 zu entnehmen ist. Bei dieser ist auf eine zweite Stützstelle komplett verzichtet und die lediglich eine Stützstelle ist als ein zweireihiges Lager, beispielsweise Kegelrollenlager ausgebildet. Dies erfordert jedoch eine deutlich größere Dimensionierung des zweireihigen Lagers, um die fehlende Stützwirkung des zweiten Lagers zu kompensieren und um Biegemomente aus den Windlasten zuverlässig abstützen zu können.

Da nur eine Lagerstelle eingesetzt ist, ist das Axialspiel gering, auch sind temperaturbedingte Längenausdehnungen weniger kritisch. Allerdings führt die erforderliche größere Dimensionierung des Lagers zu einem deutlich höheren Lagergewicht und auch zu höheren Kosten. Die gesamten Abmessungen werden dadurch deutlich vergrößert, so dass aufgrund der bei hohen elektrischen Leistungen erforderlichen Lagerabmessungen Fertigungsgrenzen beispielsweise bei Lagerdurchmessern von etwa größer gleich 3 bis 4 Meter erreicht werden.

Bei der DE 10 2008 036 217 A1 ist die Rotorwelle über zwei in Axialrichtung voneinander beabstandete Kegelrollenlager in O-Anordnung an einem gemeinsamen als Trägereinheit ausgebildeten Lagergehäuse gelagert. Die Innenringe sowie die Außenringe der beiden Lager sind dabei über Abstandshülsen in einem definierten Abstand zueinander gehalten. Für die Einstellung einer gewünschten Lager-Vorspannung werden die Hülsen in einer definierten gewünschten Länge gefertigt. Hierzu wird die Lagereinheit bei der Montage in einem aufwändigen Montageverfahren montiert, da die exakte erforderliche Länge zumindest einer der Hülsen erst bei der Montage der Lagereinheit ausgemessen und eingestellt werden muss. Dadurch ist die Montage nicht zuletzt auch aufgrund der hohen Teileanzahl aufwändig.

Aus der WO 2009/141140 A2 ist ein Hauptlager für eine Windkraftanlage zu entnehmen, bei dem in einen Hohlraum eines innenliegenden Rotors des Hauptlagers ein Getriebe angeordnet ist. Zur besseren Abstützung dieses innenliegenden Getriebes ist zusätzlich zu zwei voneinander beabstandeten Kegelrollenlager auch noch ein Gleitlager angeordnet.

Ausgehend hiervon liegt der Erfindung die Aufgabe zugrunde, eine Lagereinheit einer Windkraftanlage anzugeben, die hohen technischen Anforderungen bei hoher Wirtschaftlichkeit genügt.

Die Aufgabe wird erfindungsgemäß gelöst durch eine Lagereinheit mit den Merkmalen des Anspruchs 1. Die Lagereinheit erstreckt sich allgemein in Längsrichtung entlang einer Rotationsachse von einer vorderen Rotorseite zu einer hinteren Turmseite und weist eine Statoreinheit und eine Rotoreinheit auf, welche über ein rotorseitiges Lager sowie ein turmseitiges Lager aneinander gelagert sind. Rotor-einheit und Statoreinheit bilden dabei ein äußeres Lagergehäuse sowie einen in dieses hineinreichenden Lagerzapfen. Je nach Ausgestaltung kann dabei sowohl die Rotoreinheit als auch die Statoreinheit das Lagergehäuse oder den Lagerzapfen bilden. Die Rotoreinheit weist einen Rotorflansch zum Befestigen der Rotornabe der Windkraftanlage und die Statoreinheit einen Statorflansch zum Befestigen an einem Maschinenträger der Windkraftanlage auf. In der montierten Endstellung in der Windkraftanlage ist daher die Statoreinheit drehfest am Maschinenträger und damit am Turm der Windkraftanlage befestigt, wohingegen die Rotoreinheit zusammen mit der an ihr befestigten Rotornabe um die Rotationsachse drehbeweglich gelagert ist. Die beiden Lager sind dabei beabstandet zueinander jeweils in den gegenüberliegenden Endbereichen der Stator- oder Rotoreinheit angeordnet, und weisen dabei jeweils zwei Lagerringe, nämlich einen Innenring und einen Außenring auf. Dadurch sind also insgesamt vier Lagerringe vorgesehen, wobei zumindest für drei der Lagerringe an der Rotoreinheit und an der Statoreinheit jeweils ein fester Axialanschlag ausgebildet ist, so dass diese drei Lagerringe an definierten axialen Positionen zwischen Rotor- und Statoreinheit gehalten sind. Im montierten Zustand der Lagereinheit ist dadurch über die beiden Lager, sowie die Rotoreinheit und die Statoreinheit ein Vorspannkreis gebildet, über den bei der Montage der Lagereinheit eine definierte Vorspannung auf die Lager erzeugt wird.

Der vierte Lagerring wird dabei vorzugsweise als Lagerspannring ohne einen zugeordneten Anschlag eingesetzt und ist in Längsrichtung bevorzugt mit Hilfe eines Vorspannrings gespannt.

Die Lagereinheit ist daher insgesamt als eine vorgefertigte Baueinheit ausgebildet, die komplett vormontiert die Befestigung der Rotornabe am Rotorflansch ermöglicht und mit ihrer anderen Seite mit dem Statorflansch an den Maschinenträger der Windkraftanlage befestigt wird. Diese Ausgestaltung als vorgefertigte Baueinheit ermöglicht eine einfach, reproduzierbare und wirtschaftliche Montage dieser Baueinheit bereits in einer Montagehalle und vermeidet Montageschritte auf der Baustelle. Bei Generatoren (>Ø 4m) für direkt angetriebene Windkraftanlagen ist eine Montage einzelner Generatorsegmente aus logistischen Aspekten besonders wirtschaftlich. Hier lassen sich an die vormontierte Lagereinheit besonders effizient die einzelnen Generatorsegmente montieren.

Durch die integrierte Bauweise mit dem Lagergehäuse einerseits und dem Lagerzapfen andererseits, die an ihren gegenüberliegenden Enden durch die Lager abgestützt sind, ist zudem insgesamt eine sehr steife und spielfreie Abstützung der Windlasten bei gleichzeitig geringer Belastung der Lager erzielt.

Entscheidend hierfür ist zum einen der möglichst große Abstand der beiden Lager zueinander. Die Lager sind jeweils in gegenüberliegenden Endbereichen der Stator- und/oder der Rotoreinheit und insbesondere des Lagergehäuses angeordnet. Hierunter wird verstanden, dass die Lager in den äußeren 30%, vorzugsweise 20% der Längenausdehnung der jeweiligen Einheit angeordnet sind. Vorzugsweise sind die Lager jeweils unmittelbar an gegenüberliegenden Stirnendseiten zumindest einer der Einheiten (Rotoreinheit bzw. Statoreinheit), insbesondere des Lagergehäuses angeordnet. Bei einer unterschiedlichen Längenausdehnung der beiden Einheiten sind die Lager vorzugsweise stirnseitig an der einen Einheit angeordnet und bei der anderen Einheit das eine Lager vorzugsweise ebenfalls stirnseitig und das andere Lager zumindest am gegenüberliegenden Ende im äußeren Drittel. In Folge der hierdurch reduzierten Lagerbelastung, beispielsweise im Vergleich zu einem Momentlager mit lediglich einer, gegebenenfalls doppelreihigen Lagerabstützstelle, lassen sich die Lager deutlich geringer dimensionieren, was zu Kosten- und Gewichtseinsparungen führt.

Weiterhin zeigt eine derartige integrierte Bauweise eine hohe Maßgenauigkeit mit geringem Lagerspiel vorzugsweise sowohl in Axial- als auch in Radialrichtung. Entscheidend hierfür ist insbesondere auch die integrale Ausbildung des Vorspannkreises in der Lagerbaueinheit selbst. Da die Vorspannung bei der Montage der Lagereinheit selbst erzeugt und aufgebaut wird, ist eine spätere Einstellung auf der Baustelle nicht mehr erforderlich. Durch die gewählte Ausgestaltung mit den festen Anschlägen an der Statoreinheit und an der Rotoreinheit, an denen sich die Lagerringe zur Ausbildung des Spannkreises abstützen ist - neben einer optimierten Kräfteeinleitung zur Ausbildung des Vorspannkreises - insbesondere auch eine sehr einfache Montage ermöglicht, insbesondere im Vergleich zu dem aufwändigen Verfahren, wie es aus der DE 10 2008 036 217 A1 zu entnehmen ist. Durch die fest an der Rotor- bzw. Statoreinheit ausgebildeten Anschläge dienen Rotor und Statoreinheit daher als feste Abstandshalter für die Lager. Dadurch ist auch die Aufbringung der Lagervorspannung vergleichsweise einfach und erfolgt vorzugsweise mit Hilfe des Vorspannrings, der zweckdienlicher Weise stirnseitig mit Hilfe von Spannschrauben an der Rotoreinheit oder Statoreinheit angeschraubt wird und mit einem Ring-Flanschbereich den Lagerspannring in Axialrichtung mit einer Vorspannkraft beaufschlagt.

Neben den beiden genannten Lagern weist die Lagereinheit kein weiteres Lager auf, so dass insgesamt ein vergleichsweise einfacher Aufbau erzielt ist.

Die hier beschriebene Lagereinheit eignet sich insbesondere für den Einsatz bei einer Windkraftanlage. Grundsätzlich lässt sich diese Lagereinheit auch bei anderen großtechnischen Anlagen, insbesondere Motoren oder Generatoren einsetzen, bei denen hohe Lagerkräfte wirken. Unter großtechnischen Anlagen werden hierbei insbesondere Motoren oder Generatoren verstanden mit einer (elektrischen) Leistung von mehreren hundert Kilowatt und insbesondere einer Leistung im Megawatt-Bereich. Derartige Motoren oder Generatoren werden beispielsweise im maritimen Bereich als Schiffsmotoren oder - Generatoren für Containerschiffe oder große Passagierschiffe eingesetzt. Allgemein ist dabei im montierten Zustand die Statoreinheit an einem feststehenden Teil und die Rotoreinheit an einem rotierenden Teil der großtechnischen Anlage befestigt.

In zweckdienlicher Ausgestaltung ist die Vorspannung im montierten Zustand der Lagereinheit einstellbar. Hierzu besteht beispielsweise die Möglichkeit, den Spannring durch Anziehen von Spannschrauben in seiner Axialposition nach zu justieren. Durch diese Ausgestaltung ist also auch selbst im endmontierten Zustand, bei in der Windkraftanlage montierter Lagereinheit, wenn diese also mit Rotornabe und Maschinenträger verbunden ist, eine Nachjustierung der Vorspannung ermöglicht. Diese kann beispielsweise, nach einigen Betriebsstunden nach einer Inbetriebnahme, oder auch nach einer mehrjährigen Betriebsdauer noch vorgenommen werden.

Im Hinblick auf eine möglichst steife Ausgestaltung sind die Rotoreinheit und die Statoreinheit zweckdienlicherweise jeweils als monolithische, also als aus einem Stück gefertigte Bauteile ausgebildet. Hierbei handelt es sich insbesondere um Metall-Gussteile insbesondere Gusseisen (GJS gemäß DIN EN 1563, z. B. GJS 350). Neben den Anschlägen sind insbesondere auch die einzelnen Befestigungsflansche integrale Bestandteile dieser Einheiten. Ein weiterer Vorteil dieser Ausgestaltung ist darin zu sehen, dass die Lagerringe zweckdienlicherweise aus im Vergleich zu diesen Einheiten höherwertigem Material, insbesondere Wälzlagerstahl ausgebildet sind.

Im Hinblick auf eine möglichst günstige Anordnung des Vorspannrings ist dieser insgesamt stimendseitig und vorzugsweise an einem rotorseitigen Stirnende der Lagereinheit befestigt.

Der Abstand zwischen den beiden Lagern ist möglichst groß gewählt, um die Momente möglichst gut aufnehmen zu können. Zweckdienlicherweise beträgt der Abstand zwischen den Lagern mindestens das 0,35-fache des maximalen Lagerdurchmessers. Bei einer kegelförmigen Ausgestaltung des Lagerzapfens wird hierunter der größere Lageraußendurchmesser des Lageraußenrings am verdickten Ende verstanden.

Die Lagereinheit ist insgesamt für Windkraftenergieanlagen mit Leistungen im Multi-Mega-Watt-Bereich ausgelegt. Grundsätzlich ist dieses Konstruktionsprinzip auch auf kleinere Anlagen übertragbar. Allgemein ist bei derartigen großtechnischen Anlagen die Lagereinheit ausreichend groß dimensioniert, so dass der Lagerzapfen/-welle innen begehbar ist. Typischerweise weist der Lagerzapfen einen (Außen) Durchmesser im Bereich von 2 bis 3,5 Meter auf. Die Baueinheit hat einen Durchmesser etwa im Bereich von 2,5 bis 4 Metern bei einer Länge von etwa 2 bis 3,5 Metern. Dies bedeutet, dass der (größte) Außendurchmesser der Lageraußenringe etwa zwischen 2 und 3,5 Metern liegt. Dadurch liegt der Abstand zwischen den beiden Lagereinheiten mindestens bei - je nach Größe - 0,7 bis 1,2 Meter. Vorzugsweise wird der Abstand möglichst groß gewählt. Insbesondere sind die beiden Lager jeweils an gegenüberliegenden Stirnseiten des Lagegehäuses angeordnet. Der Abstand liegt dann etwa im Bereich des 0,5 bis 0,7-fachen Lageraußendurchmessers und liegt - je nach Größe - zwischen 1 und 1,75 Metern.

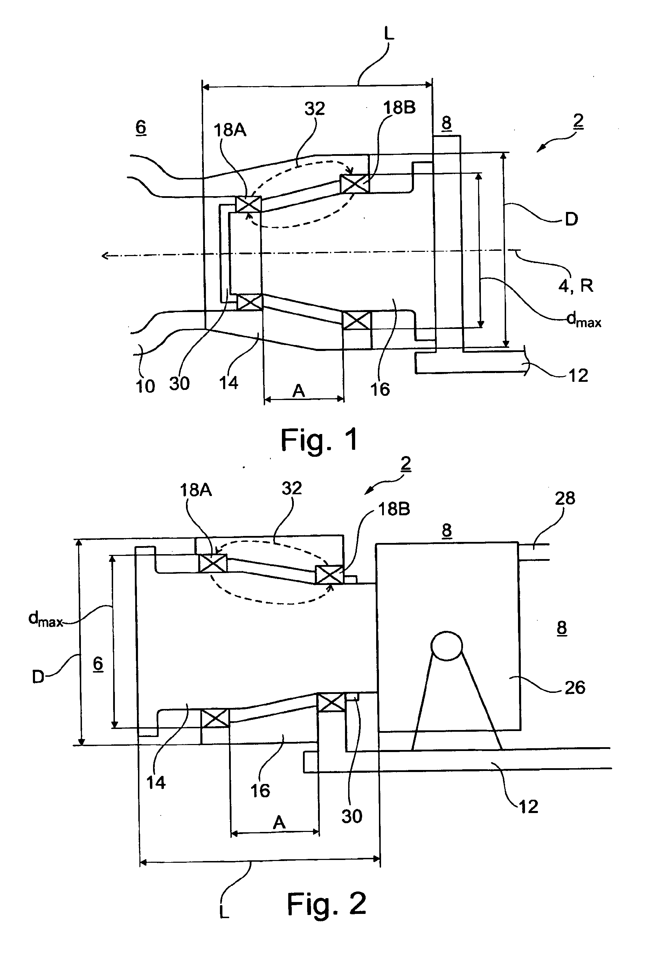

Der Lagerzapfen, vorzugsweise die Statoreinheit, ist in zweckdienlicher Ausgestaltung hohlkegelförmig ausgebildet und verjüngt sich zur Rotorseite bei festem Lagerzapfen (Figur 1) und zur Maschinenträgerseite bei festen Lagergehäuse (Figur 2). Ergänzend ist weiterhin zweckdienlicherweise vorgesehen, dass das den Lagerzapfen umgebende Lagergehäuse, insbesondere die Rotoreinheit, den Lagerzapfen nach Art eines Spannbogens umgibt. Die Wandung des Lagergehäuses verläuft daher in Längsrichtung betrachtet nicht parallel zur Wandung des Lagerzapfens, sondern beschreibt im weitesten Sinne einen Bogen zwischen den Lagern. Hierzu ist die Wandung zumindest in Teilbereichen bogenförmig ausgebildet. Grundsätzlich kann die spannbogenartige Ausgestaltung auch durch geradlinige Teilbereiche ausgebildet sein. Ein insbesondere konvex gekrümmter Verlauf der Wandung des Lagergehäuses in Längsrichtung ist jedoch für die Übertragung der Vorspannkraft zur Ausbildung des Vorspannkreises und zur Vermeidung von Spannungsspitzen von besonderem Vorteil. Durch diese spezielle bogenförmige Ausgestaltung wird eine besonders wirksame Kraftübertragung der eingebrachten Vorspannkraft von dem einen Lager zu dem anderen Lager erzielt.

Zweckdienlicherweise sind hierbei an der Innenseite des Lagergehäuses im nach Außen ausgewölbten Bogenbereich Versteifungsrippen angeordnet, die insbesondere in Längsrichtung verlaufen und bevorzugt eine bogensegmentartige Fläche aufweisen.

Bei den Lagern handelt es sich zweckdienticherweise um schräg zur Längsrichtung gestellte Kegelrollenlager, vorzugsweise in O-Ausrichtung, alternativ aber auch in X-Ausrichtung. Durch die Schrägstellung wird eine geeignete Krafteinleitung und Übertragung für den Vorspannkreis erzielt. Die einzelnen Kegel sind dabei bezüglich der Längsrichtung beispielsweise unter einem Winkel von 10° bis 40° orientiert

In zweckdienlicher Weiterbildung sind die beiden voneinander beabstandeten Lager für unterschiedliche Belastungen ausgebildet. Hierunter wird verstanden, dass die beiden Lager entsprechend den Anforderungen an der jeweiligen Lagerposition spezifisch konstruktiv ausgelegt sind. Üblicherweise ist daher das turm- bzw. maschinenträgerseitige Lager für deutlich geringere Lasten ausgelegt und ist üblicherweise dadurch auch hinsichtlich der Tragfähigkeit kleiner dimensioniert. Hierunter wird verstanden, dass das Lager eine geringere Tragzahl (statisch oder dynamisch; Cₒ, C) aufweist. Dadurch wird zum Einen eine optimale Anpassung der gesamten Lagerkonstruktion auf die zu erwartenden Windlasten ermöglicht. Auch lässt sich hierüber das Abwälzverhalten der einzelnen Lagerteile optimieren, wodurch insgesamt optimierte Reibkräfte erzielt werden, um eine möglichst reibungsarme Lagerung zu erzielen. Zusätzlich wird sowohl das Lagergewicht als auch der Materialeinsatz gering gehalten. Dadurch reduzieren sich auch die Fertigungskosten der Lagereinheit. Durch die unterschiedliche, belastungspezifische Auslegung der Lager wird zudem insgesamt auch eine optimierte Ausnutzung der Lebensdauerreserven der Lagereinheit erzielt, da die zu erwartende Lebensdauer aneinander angeglichen sind, was bei dem Konzept des Momentenlagers so nicht möglich ist.

Bei der Lagereinheit handelt es sich vorzugsweise insgesamt um ein dicht abgeschlossenes System, wozu an den beiden Lagern außenseitig vorzugsweise Dichtringe zu Abdichtzwecken angeordnet sind. Zweckdienlicherweise sind ergänzend auch ringförmige Lagerdeckel zum Schutz der Lager angeordnet. Dadurch ergibt sich insgesamt eine in sich abgeschlossene, abgedichtet und auch voreingestellte Baueinheit, die montagefertig bereitgestellt und beispielsweise an den Ort der Windkraftanlage oder einen Spezialbetrieb geliefert werden kann. Hierdurch reduziert sich die Gefahr von Verunreinigungen und Beschädigungen während der Montage als auch während des Transports.

In zweckdienlicher Ausgestaltung bildet die Rotoreinheit das außenliegende Lagergehäuse und die Statoreinheit den innenliegenden Lagerzapfen, welcher feststehenden mit dem Maschinenträger verbunden ist.

Weiterhin ist die Lagereinheit vorzugsweise zur unmittelbaren, direkten Befestigung an einem Generator ausgebildet, wobei hierzu die Rotoreinheit zumindest einen zusätzlichen Generatorflansch zur Befestigung an einem Rotor des Generators aufweist. Der Stator des Generators ist vorzugsweise unmittelbar an der Statoreinheit der Lagereinheit befestigt. Der Generator umgibt hierbei zweckdienlicherweise die Lagereinheit in etwa konzentrisch, was insgesamt zu einer sehr platzsparenden Anordnung führt. Ein besonderer Vorteil einer fertig montierten und zur Baustelle gelieferten Baueinheit ist die mögliche Montage von einzelnen Generatorsegmenten direkt auf der Baustelle der Windkraftanlage.

Die Generatorflansche sind insbesondere zwischen dem Rotorflansch und dem Statorflansch ausgebildet, um einen möglichst großen Abstand zwischen diesen beiden Flanschen und damit zwischen den beiden Lagern zu ermöglichen.

Ein Ausführungsbeispiel der Erfindung wird im Folgenden anhand der Figuren näher erläutert. Diese zeigen jeweils in teilweise vereinfachten Darstellungen:
- Fig. 1: eine ausschnittsweise, stark vereinfachte Darstellung einer Lagereinheit in endmontierter Position für einen Generator-Direktantrieb,
- Fig. 2: die Lagereinheit in endmontierter Position mit zwischen Lagereinheit und Generator geschaltetem Getriebe,
- Fig. 3: eine vereinfachte, ausschnittsweise und teilweise Aufrissdarstellung einer Windkraftanlage mit Lagereinheit und direkt angetriebenem Generator,
- Fig. 4: einen vereinfachten, perspektivischen Teilaufriss der Lagereinheit,
- Fig. 5: die Lagereinheit in einem Längsschnitt, sowie
- Fig. 6: eine vergrößerte Darstellung eines Teilbereichs der Lagereinheit gemäß Fig. 5.

In den Figuren sind gleichwirkende Teile mit den gleichen Bezugszeichen versehen.

Figuren 1 und 2 zeigen zwei stark vereinfachte Darstellungen zweier Ausführungsvarianten der Anordnung einer Lagereinheit 2 innerhalb einer Windkraftanlage. Die Lagereinheit 2 erstreckt sich in Längsrichtung 4 entlang einer Rotationsachse R von einer vorderen Rotorseite 6 bis zu einer hinteren Turmseite 8. Am vorderen rotorseitigen Stirnende der Lagereinheit 2 ist die Rotornabe 10 befestigt und in ihrem gegenüberliegenden, turmseitigen Endbereich ist sie an einem Maschinenträger 12 befestigt. Die Lagereinheit 2 weist dabei allgemein eine mit der Rotornabe 10 verbundene Rotoreinheit 14 sowie eine mit dem Maschinenträger 12 verbundene Statoreinheit 16 auf. Rotoreinheit 14 und Statoreinheit 16 bilden dabei ein Lagergehäuse bzw. einen Lagerzapfen der Lagereinheit 2 und sind aneinander über zwei Lager, nämlich ein rotorseitiges Lager 18A sowie ein turmseitiges Lager 18B aneinander gelagert.

Bei der Ausführungsvariante gemäß Figur 1 bildet die Rotoreinheit 14 das außenliegende Lagergehäuse und die Statoreinheit 16 den innenliegenden Lagerzapfen. Beim Ausführungsbeispiel der Figur 2 ist es umgekehrt, hier bildet die Rotoreinheit 14 den Lagerzapfen und die Statoreinheit 16 das Lagergehäuse.

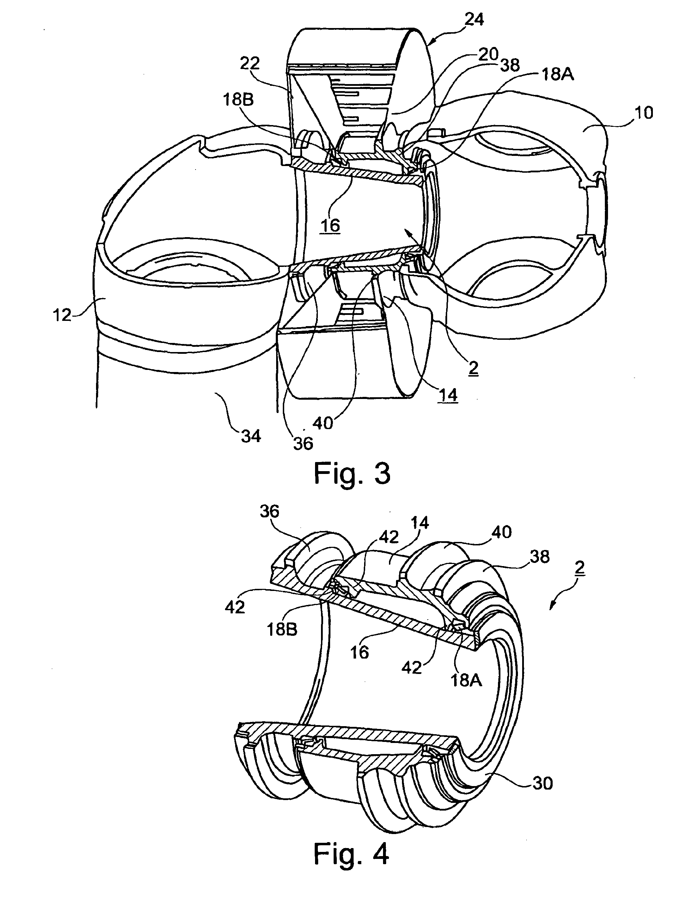

Allgemein rotiert die Rotoreinheit 14 im Betrieb um die Rotationsachse R, wohingegen die Statoreinheit 16 feststehend mit dem Maschinenträger 12 verbunden ist. Bei der Ausführungsvariante der Figur 1 ist die Rotoreinheit 14 direkt mit einem Rotor 20 sowie die Statoreinheit 16 mit einem Stator 22 eines Generators 24 (vgl. Figur 3) für einen Direktantrieb des Generators 24 verbunden.

Im Unterschied hierzu ist die Statoreinheit 16 bei der Ausführungsvariante gemäß Figur 2 mit einer Getriebeeinheit 26 verbunden und über eine Abtriebswelle 28 mittelbar über einen in Figur 2 nicht dargestellten Generator.

Wie aus den Figuren 1 und 2 hervorgeht, weist der Lagerzapfen eine im Wesentlichen hohlkegelförmige Geometrie auf. Bei der Ausführungsvariante der Figur 1 ist dies die Statoreinheit 16, die sich zur Rotorseite 6 hin verjüngt. Umgekehrt verjüngt sich bei der Ausführungsvariante der Figur 2 die Rotoreinheit 14 als Lagerzapfen zur Turmseite 8 hin.

In beiden Fällen ist an dem jeweiligen Lager 18A, 18B am verjüngten Ende des Lagerzapfens ein als Vorspannring 30 ausgebildetes Vorspannelement angeordnet, welches das jeweilige Lager 18A, 18B in Längsrichtung 4 mit einer Vorspannkraft beaufschlagt, so dass die gesamte Lagereinheit 2 vorgespannt ist und somit spielfrei sowohl in Axialrichtung als auch in Radialrichtung montiert ist. Die vom Vorspannring 30 erzeugte Spannkraft wird über das jeweilige erste Lager 18A, 18B auf das Lagergehäuse, von dort über das gegenüberliegende zweite Lager 18B, 18A auf den Lagerzapfen und über diesen wieder auf das erste Lager 18A, 18B übertragen, so dass ein Vorspannkreis 32 durch diese Komponenten gebildet ist, der beispielhaft in den Figuren 1 und 2 dargestellt ist.

Bei der Lagereinheit 2 mit den Komponenten Rotoreinheit 14, Statoreinheit 16, Lager 18A, 18B sowie Vorspannring 30 handelt es sich um eine vormontierte Baueinheit, die also im montierten Zustand an den Ort der Windkraftanlage geliefert und dort lediglich noch mit der Rotornabe 10 und dem Maschinenträger 12 montiert wird. Bei einer Direktantriebsvariante wie sie in Figur 1 dargestellt ist besteht darüber hinaus grundsätzlich die Möglichkeit, auch den Generator bereits zusammen mit der Lagereinheit 2 vormontiert zu liefern.

Die gesamte Lagereinheit 2 weist eine Länge L sowie einen maximalen Durchmesser D auf. Weiterhin ist durch die Lagereinheit 2 ein größter Lagerdurchmesser dₘₐₓ definiert, der durch den größter Außendurchmesser eines der Lager 18A, 18B definiert ist. Die beiden Lager 18A, 18B sind um einen Abstand A voneinander beabstandet, der möglichst groß gewählt ist und mindestens dem 0,35-fachen des Lagerdurchmessers dₘₐₓ beträgt. Vorzugsweise liegt der Abstand A zwischen dem 0,6- und dem 1-fachen des Lagerdurchmessers dₘₐₓ

Weitere Details zu der Ausführungsvariante mit dem Direktantrieb sind aus den Figuren 3 bis 6 zu entnehmen. Figur 3 zeigt hierbei einen teilweise im Aufriss dargestellten Ausschnitt aus einer Windkraftanlage, bei der an einem oberen Kopfende eines Turms 34 eine drehbare und den Maschinenträger 12 bildende Gondel befestigt ist. An dieser ist die Lagereinheit 2 mit ihrer Statoreinheit 16 über einen Statorflansch 36 befestigt. Bei diesem handelt es sich um einen stimendseitig umlaufenden Ringflansch. Am gegenüberliegenden Ende ist an der Lagereinheit 2 die Rotornabe 10 über einen Rotorflansch 38 befestigt. An der Rotornabe 10 selbst sind hier in nicht näher dargestellter Weise Rotorblätter befestigt.

Zwischen dem Statorflansch 36 und dem Rotorflansch 38 ist weiterhin ein Generatorflansch 40 an der Umfangsseite der Rotoreinheit 14 ausgeformt. Dieser ist etwa im vorderen Drittel der Rotoreinheit 14 ausgebildet. Über den Generatorflansch 40 ist der Rotor 20 des Generators 24 befestigt. Über den Statorflansch 36 ist weiterhin der Stator 22, also das Generatorgehäuse befestigt.

Wie insbesondere auch aus der vergrößerten Darstellung gemäß Figur 4 zu erkennen ist, handelt es sich bei den beiden Einheiten 14, 16 jeweils um monolithische, einstückige Einheiten, vorzugsweise Metallguss-Einheiten, bei denen die einzelnen Flanschen 36, 38, 40 sowie weiterhin mehrere Anschläge 42 angeformt sind, an denen sich die Lager 18A, 18B in Längsrichtung 4 abstützen, wie nachfolgend noch näher erläutert wird. Durch diese monolithische Ausgestaltung weist die gesamte, vorgespannte Lagereinheit 2 eine hohe Steifigkeit bei nur geringsten Lagerspielen auf. Durch den vergleichsweise großen Abstand A zwischen den beiden Lagern 18A, 18B werden zudem die Kräfte auch bei unterschiedlichen Windbeanspruchungen sowohl in Axialrichtung als auch Kippmomente zuverlässig aufgenommen. Aufgrund des nicht vorhandenen Lagerspiels erlaubt dies zugleich auch eine Montage des Generators 24 mit extrem geringem Generatorspalt zwischen Stator 22 und Rotor 20, so dass der Wirkungsgrad des Generators 24 im Vergleich zu der Verwendung von anderen Lagerkonzepten erhöht ist. Maßgebend ist hierfür die Ausgestaltung der Lagereinheit 2 als vorgespannte Baueinheit mit den weit voneinander beabstandeten Lagern 18A, 18B. Für die Vorspannung und die Erzeugung der hohen gewünschten Steifigkeit ist zudem von wesentlicher Bedeutung, dass die Anschläge 42 an der Rotoreinheit 14 bzw. der Statoreinheit 16 angeformt sind, um die Vorspannkräfte zu übertragen.

Ein weiterer wesentlicher Vorteil ist in der geringen Teileanzahl zu sehen, wodurch die Montage vergleichsweise einfach ist.

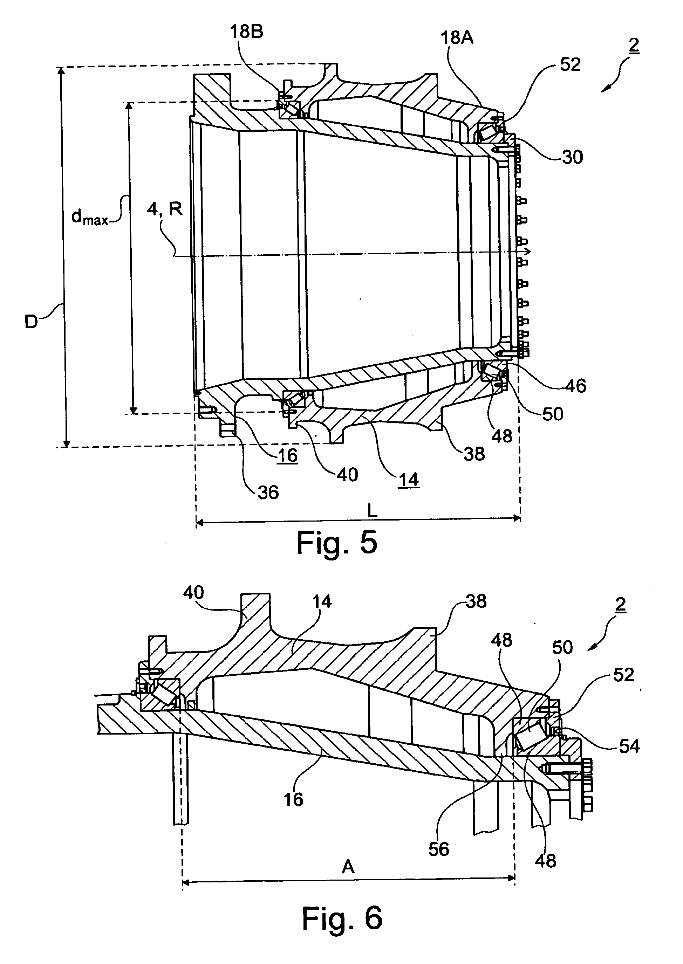

Wie aus den Figuren 3 und 4 und in größerer Deutlichkeit noch aus den Figuren 5 und 6 zu entnehmen ist, ist das Lagergehäuse (Rotoreinheit 14) im Querschnitt betrachtet in etwa leicht bogenförmig ausgebildet, so dass die Innenwandung der Rotoreinheit 14 nicht exakt parallel zur Außenwandung der Statoreinheit 16 verläuft. Über bogenförmige Abschnitte geht das Lagergehäuse jeweils in die in radialer Richtung orientierten Anschläge 42 über. Durch die bogenförmige Ausgestaltung werden die Vorspannkräfte effizient übertragen, ohne dass Spannungsspitzen entstehen.

Zur Versteifung des Lagergehäuses weist dieses an seiner Innenwandung vorzugsweise Versteifungsrippen 44 auf (Figuren 5, 6).

Wie insbesondere aus Figur 6 zu entnehme ist, handelt es sich bei den Lagern 18A, 18B um schräg gestellte Kegelrollenlager, die jeweils einen Innenring 46, einen Außenring 48 sowie eine Vielzahl von Kegelrollen als Wälzelemente aufweisen. Im Ausführungsbeispiel sind die Lager 18A, 18B in O-Anordnung zueinander orientiert. Weitere Lager sind zwischen der Rotoreinheit 14 und der Statoreinheit 16 nicht angeordnet. Bei dem turmseitigen Lager 18B ist sowohl der Außenring 48 als auch der Innenring 46 jeweils an einer Seite in Längsrichtung 4 an einem Anschlag 42 abgestützt. Gleichzeitig ist auch eine radiale Abstützung erzielt. Im Bereich des Anschlags 42 ist sowohl die Rotoreinheit 14 als auch die Statoreinheit 16 im Querschnitt betrachtet jeweils in etwa L-förmig ausgebildet. Demgegenüber ist beim rotorseitigen Lager 18A lediglich der Außenring 48 in Längsrichtung 4 über einen Anschlag 42 abstützt. Der Innenring 46 ist demgegenüber in Längsrichtung 4 leicht versetzbar und mit Hilfe des Vorspannrings 30 gegen die Kegelrollen 50 zur Ausbildung der Vorspannung und des Vorspannkreises 32 verspannbar. Dieser Innenring 46 ist daher als ein Lagerspannring ausgebildet. Der Vorspannring 30 ist hierzu über eine Vielzahl von Bolzen an der Statoreinheit 16 befestigt und weist einen randseitig über die Stirnseite der Statoreinheit 16 überstehenden Ringkragen auf, der gegen den Innenring 46 gepresst wird. Die über den Vorspannring 30 erzeugte Vorspannung ist vorzugsweise auch noch nach erfolgter Montage der Lagereinheit 2 verstell- und einstellbar, um beispielsweise nach einer gewissen Anzahl von Betriebsstunden die Vorspannung nachjustieren zu können, ohne dass eine Um- oder Demontage der Lagereinheit 2 erforderlich wäre.

Die beiden Lager 18A, 18B sind weiterhin gegenüber der Umgebung abgedichtet, so dass bereits bei der Montage eine definierte Menge an Lagerschmiermittel eingebracht werden kann, welches beispielsweise auf eine bestimmte Betriebsdauer oder auf die Lebensdauer des Lagers abgestimmt ist. Durch die abgedichtete Ausführung ist die Lagereinheit 2 auch unanfällig gegenüber Schmutz beispielsweise beim Transport oder bei der Montage. Für diese Abdichtung weist jedes Lager 18A, 18B im Ausführungsbeispiel einen ringförmigen Lagerdeckel 52 auf, welcher im Ausführungsbeispiel an der Rotoreinheit 14 befestigt ist. Weiterhin sind zumindest ein Außendichtring 54 im Bereich des Lagerdeckels 42 sowie weiterhin ein Innendichtring 56 an der gegenüberliegenden Innenseite vorgesehen. Der Innendichtring 56 dichtet hierbei die Ringanlagefläche des jeweiligen Anschlags 42 der Rotoreinheit 14 zur Außenwandung der Statoreinheit 16 hin ab. Die Innendichtung liegt hierzu in einer Ringnut ein.

Der Aufbau und die Vorteile der Lagereinheit 2 wurden im Zusammenhang mit der Anordnung bei einer Windkraftanlage beschrieben, ist jedoch nicht auf diese Anwendung beschränkt. Die Lagereinheit 2 mit ihren Vorteilen lässt sich grundsätzlich auch in anderen großtechnischen Anlagen einsetzten, beispielsweise zur Lagerung einer Motor- oder Generatorwelle bei einem Verbrennungsmotor (z.B. Schiffsdiesel), bei einem elektrischen Motor bzw. bei einem Generator. Die Lagerung der Welle eines elektrischen Motors bzw. eines elektrischen Generators erfolgt beispielsweise wie beim Ausführungsbeispiel der Fig. 3 des direktangetriebenen Generators 24.

**Bezugszeichenliste**

| | | | |
|---|---|---|---|
| 2 | Lagereinheit | R | Rotationsachse |
| 4 | Längsrichtung | A | Abstand |
| 6 | Rotorseite | L | Lager |
| 8 | Turmseite | D | Durchmesser |
| 10 | Rotornabe | dₘₐₓ | Lagerdurchmesser |
| 12 | Maschinenträger | | |
| 14 | Rotoreinheit | | |
| 16 | Statoreinheit | | |
| 18A | rotorseitiges Lager | | |
| 18B | turmseitiges Lager | | |
| 20 | Rotor des Generators | | |
| 22 | Stator des Generators | | |
| 24 | Generator | | |
| 26 | Getriebeeinheit | | |
| 28 | Abtriebswelle | | |
| 30 | Vorspannring | | |
| 32 | Vorspannkreis | | |
| 34 | Turm | | |
| 36 | Statorflansch | | |
| 38 | Rotorflansch | | |
| 40 | Generatorflansch | | |
| 42 | Anschlag | | |
| 44 | Versteifungsrippe | | |
| 46 | Innenring | | |
| 48 | Außenring | | |
| 50 | Kegelrollen | | |
| 52 | Lagerdeckel | | |
| 54 | Außendichtung | | |
| 56 | Innendichtung | | |

## Patentansprüche

1. Lagereinheit (2) einer Windkraftanlage, wobei die Lagereinheit (2) sich in einer Längsrichtung (4) entlang einer Rotationsachse (R) von einer vorderen Rotorseite (6) zu einer hinteren Turmseite (8) erstreckt, mit einer Statoreinheit (16) und einer Rotoreinheit (14), die über ein rotorseitiges Lager (18A) sowie ein turmseitiges Lager (18B) aneinander ohne weitere Lager gelagert sind und ein Lagergehäuse sowie einen Lagerzapfen bilden, wobei die Statoreinheit (16) einen Statorflansch (36) und die Rotoreinheit (14) einen Rotorflansch (38) aufweisen und im montierten Zustand die Lagereinheit (2) über den Statorflansch (36) an einem Maschinenträger (12) der Windkraftanlage und über den Rotorflansch (38) an einer mit Rotorblättern versehenen Rotornabe (10) befestigt ist und die beiden Lager (18A, 18B) beabstandet zueinander jeweils in den gegenüberliegenden Endbereichen der Stator- oder Rotoreinheit (14, 16) angeordnet sind und jeweils zwei Lagerringe, nämlich einen Innenring (46) und einen Außenring (48) umfassen,
**dadurch gekennzeichnet,**
**dass** sie als eine vorgefertigte Baueinheit ausgebildet ist und für drei der Lagerringe (46, 48) an der Rotoreinheit (14) und an der Statoreinheit (16) jeweils ein fester Anschlag (42) ausgebildet ist, so dass über die beiden Lager (18A, 18B), die Rotoreinheit (14) und die Statoreinheit (16) ein Vorspannkreis (32) gebildet ist, über den bei der Montage der Lagereinheit (2) eine definierte Vorspannung erzeugt wird.

2. Lagereinheit (2) nach Anspruch 1, **dadurch gekennzeichnet, dass** einer der Lagerringe (46, 48) ohne zugeordnetem Anschlag (42) als Lagerspannring ausgebildet ist, der in Längsrichtung (4) mit Hilfe eines Vorspannrings (30) gespannt ist, wobei hierzu der Vorspannring (30) an der Rotoreinheit (14) oder der Statoreinheit (16) befestigt ist.

3. Lagereinheit (2) nach einem der vorhergehenden Ansprüche, **dadurch gekennzeichnet, dass** die Vorspannung im montierten Zustand der Lagereinheit (2) einstellbar ist.

4. Lagereinheit (2) nach einem der vorhergehenden Ansprüche, **dadurch gekennzeichnet, dass** die Rotoreinheit (14) und die Statoreinheit (16) jeweils monolithische Bauteile sind, bei denen die Anschläge (42) angeformt sind.

5. Lagereinheit (2) nach einem der vorhergehenden Ansprüche, **dadurch gekennzeichnet, dass** die Lager (18A, 18B) einen durch den Außendurchmesser des Außenrings (46) definierten Lagerdurchmesser aufweisen und der Abstand (A) in Längsrichtung (4) zwischen den Lagern (18A, 18B) mindestens dem 0,35-fachen des größten Lagerdurchmessers (dₘₐₓ)entspricht.

6. Lagereinheit (2) nach einem der vorhergehenden Ansprüche, **dadurch gekennzeichnet, dass** der Lagerzapfen hohlkegelförmig ausgebildet ist.

7. Lagereinheit (2) nach einem der vorhergehenden Ansprüche, **dadurch gekennzeichnet, dass** in einem Längsquerschnitt betrachtet das Lagergehäuse in Relation zum Lagerzapfen nach Art eines Spannbogens ausgebildet ist.

8. Lagereinheit (2) nach einem der vorhergehenden Ansprüche, **dadurch gekennzeichnet, dass** es sich bei den Lagern (18A, 18B) um schräg zur Längsrichtung (4) gestellte Kegelrollenlager handelt.

9. Lagereinheit (2) nach einem der vorhergehenden Ansprüche, **dadurch gekennzeichnet, dass** die beiden Lager (18A, 18B) für unterschiedliche Belastungen ausgebildet sind.

10. Lagereinheit (2) nach einem der vorhergehenden Ansprüche, **dadurch gekennzeichnet, dass** sie ein nach außen abgeschlossenes Dichtsystem aufweist und an den beiden Lagern (18A, 18B) zur Rotorseite (6) und zur Turmseite (8) Dichtungen (54, 56) angeordnet sind.

11. Lagereinheit (2) nach einem der vorhergehenden Ansprüche, **dadurch gekennzeichnet, dass** die Rotoreinheit (14) das außenliegende Lagergehäuse bildet.

12. Lagereinheit (2) nach einem der vorhergehenden Ansprüche, **dadurch gekennzeichnet, dass** sie zur unmittelbaren Befestigung an einem Generator (24) ausgebildet ist und hierzu die Rotoreinheit (14) einen zusätzlichen Generatorflansch (40) zur Befestigung an einem Rotor (20) des Generators (24) aufweist.

13. Lagereinheit (2) nach Anspruch 12, **dadurch gekennzeichnet, dass** vorzugsweise mehrere Generatorflansche (40) zwischen dem Rotorflansch (38) und dem Statorflansch (36) angeordnet sind.

## Claims

1. Bearing unit (2) of a wind turbine, wherein the bearing unit (2) extends in a longitudinal direction (4) along a rotational axis (R) from a front rotor side (6) to a rear tower side (8), having a stator unit (16) and a rotor unit (14) which are supported against each other by way of a bearing on the rotor side (18A) and a bearing on the tower side (18B) without further bearings, and form a bearing housing as well as a bearing journal, wherein the stator unit (16) has a stator flange (36) and the rotor unit (14) has a rotor flange (38) and, in the assembled state, the bearing unit (2) is attached via the stator flange (36) to a mainframe (12) of the wind turbine and via the rotor flange (38) to a rotor hub (10) having rotor blades added to it, and both bearings (18A, 18B) are arranged at distance from each other in the opposing end areas of the stator or rotor unit (14, 16) and each comprise two bearing rings, specifically an inner ring (46) and an outer ring (48),
**characterised in that**,
it is formed as a pre-built unit and a fixed end stop (42) is formed respectively for three of the bearing rings (46, 48) on the rotor unit (14) and on the stator unit (16), such that, using both bearings (18A, 18B), the rotor unit (14) and the stator unit (16), a lead circuit (32) is formed, via which a defined preload is generated during the assembly of the bearing unit (2).

2. Bearing unit (2) according to claim 1, **characterised in that** one of the bearing rings (46, 48) without an assigned end stop (42) is formed as a bearing clamping ring, which is stretched in the longitudinal direction (4) with the aid of a lead ring (30), wherein the lead ring (30) is attached to the rotor unit (14) or the stator unit (16) for this purpose.

3. Bearing unit (2) according to one of the preceding claims, **characterised in that** the preload is adjustable in the assembled state of the bearing unit (2).

4. Bearing unit (2) according to one of the preceding claims, **characterised in that** the rotor unit (14) and the stator unit (16) are both monolithic components, on which the end stops (42) are formed.

5. Bearing unit (2) according to one of the preceding claims, **characterised in that** the bearings (18A, 18B) have a bearing diameter defined by the external diameter of the outer ring (46) and the space (A) in the longitudinal direction (4) between the bearings (18A, 18B) corresponds to at least 0.35-fold of the largest bearing diameter (dₘₐₓ).

6. Bearing unit (2) according to one of the preceding claims, **characterised in that** the bearing journal is formed in a hollow cone shape.

7. Bearing unit (2) according to one of the preceding claims, **characterised in that**, viewed from a longitudinal cross-section, the bearing housing is formed in relation to the bearing journal in the style of a tensioned arc.

8. Bearing unit (2) according to one of the preceding claims, **characterised in that** the bearings (18A, 18B) are conical roller bearings placed at an angle to the longitudinal direction (4).

9. Bearing unit (2) according to one of the preceding claims, **characterised in that** both bearings (18A, 18B) are formed for different loads.

10. Bearing unit (2) according to one of the preceding claims, **characterised in that** it has an externally isolated sealing system and seals (54, 56) are arranged on both of the bearings (18A, 18B) on the rotor side (6) and on the tower side (8).

11. Bearing unit (2) according to one of the preceding claims, **characterised in that** the rotor unit (14) forms the external bearing housing.

12. Bearing unit (2) according to one of the preceding claims, **characterised in that** it is designed for immediate attachment to a generator (24) and, for this purpose, the rotor unit (14) has an additional generator flange (40) for attachment to a rotor (20) of the generator (24).

13. Bearing unit (2) according to claim 12, **characterised in that** several generator flanges (40) are preferably arranged between the rotor flange (38) and the stator flange (36).

## Revendications

1. Unité de palier (2) d'une éolienne, l'unité de palier (2) s'étendant dans une direction longitudinale (4) le long d'un axe de rotation (R), à partir d'un côté de rotor avant (6) jusqu'à un côté de pylône arrière (8), et comprenant une unité de stator (16) et une unité de rotor (14), qui sont montées sur palier l'une par rapport à l'autre par l'intermédiaire d'un roulement côté rotor (18A) ainsi que d'un roulement côté pylône (18B), sans autres roulements supplémentaires, et qui forment un carter de palier ainsi qu'un tourillon de palier, unité de palier dans laquelle l'unité de stator (16) comporte un flasque de stator (36) et l'unité de rotor (14) un flasque de rotor (38), et dans l'état monté, l'unité de palier (2) est fixée, par l'intermédiaire du flasque de stator (36), à un support de machine (12) de l'éolienne, et par l'intermédiaire du flasque de rotor (38), à un moyeu de rotor (10) muni de pales de rotor, et les deux roulements (18A, 18B) sont agencés de manière espacée l'un de l'autre, dans des zones d'extrémité opposées de l'unité de stator ou de rotor (14, 16), et comprennent chacun deux bagues de roulement, à savoir une bague intérieure (46) et une bague extérieure (48),
**caractérisée**
**en ce qu'**elle est réalisée sous forme d'unité de construction préfabriquée, et pour trois des bagues de roulement (46, 48) une butée fixe (42) respective est formée sur l'unité de rotor (14) et sur l'unité de stator (16), de sorte que par l'intermédiaire des deux roulements (18A, 18B), de l'unité de rotor (14) et de l'unité de stator (16), il est formé un circuit de précontrainte (32) via lequel est produite une précontrainte définie lors du montage de l'unité de palier (2).

2. Unité de palier (2) selon la revendication 1, **caractérisée en ce que** l'une des bagues de roulement (46, 48) sans butée (42) associée, est configurée en tant que bague de serrage de palier, qui est serrée dans la direction longitudinale (4) à l'aide d'un anneau de précontrainte (30), l'anneau de précontrainte (30) étant à cet effet fixé à l'unité de rotor (14) ou à l'unité de stator (16).

3. Unité de palier (2) selon l'une des revendications précédentes, **caractérisée en ce que** la précontrainte est réglable dans l'état monté de l'unité de palier (2).

4. Unité de palier (2) selon l'une des revendications précédentes, **caractérisée en ce que** l'unité de rotor (14) et l'unité de stator (16) sont respectivement des pièces monolithiques, sur lesquelles sont formées les butées (42).

5. Unité de palier (2) selon l'une des revendications précédentes, **caractérisée en ce que** les roulements (18A, 18B) présentent un diamètre de roulement défini par le diamètre extérieur de la bague extérieure (46), et la distance (A) dans la direction longitudinale (4), entre les roulements (18A, 18B), correspond à au moins 0,35 fois le diamètre de roulement le plus grand (dₘₐₓ).

6. Unité de palier (2) selon l'une des revendications précédentes, **caractérisée en ce que** le tourillon de palier est d'une configuration conique creuse.

7. Unité de palier (2) selon l'une des revendications précédentes, **caractérisée en ce que** vu dans une section longitudinale, le carter de palier est réalisé, en relation avec le tourillon de palier, à la manière d'un arc tendeur.

8. Unité de palier (2) selon l'une des revendications précédentes, **caractérisée en ce que** concernant les roulements (18A, 18B), il s'agit de roulements à rouleaux coniques montés de manière oblique par rapport à la direction longitudinale (4).

9. Unité de palier (2) selon l'une des revendications précédentes, **caractérisée en ce que** les deux roulements (18A, 18B) sont conçus pour des charges différentes.

10. Unité de palier (2) selon l'une des revendications précédentes, **caractérisée en ce qu'**elle comporte un système d'étanchéité fermé vers l'extérieur, et des joints d'étanchéité (54, 56) sont agencés au niveau des deux roulements (18A, 18B) vers le côté rotor (6) et vers le côté pylône (8).

11. Unité de palier (2) selon l'une des revendications précédentes, **caractérisée en ce que** l'unité de rotor (14) forme le carter de palier situé à l'extérieur.

12. Unité de palier (2) selon l'une des revendications précédentes, **caractérisée en ce qu'**elle est conçue pour une fixation directe sur un générateur (24), et l'unité de rotor (14) présente à cet effet un flasque de générateur (40) supplémentaire pour la fixation à un rotor (20) du générateur (24).

13. Unité de palier (2) selon la revendication 12, **caractérisée en ce que** de préférence plusieurs flasques de générateur (40) sont agencés entre le flasque de rotor (38) et le flasque de stator (36).
